# EUROPEAN PATENT APPLICATION

(11) **EP 2 966 609 A1**
(43) Date of publication of application: **13.01.2016**
(21) Application number: 14290198.2
(22) Date of filing: 08.07.2014
(51) Int. Cl.: G06Q 30/02

(54) **Preventive auditing**

(71) Applicant: Amadeus S.A.S., 06410 Biot (FR)
(72) Inventor: Canis, Laure, 06300 Nice (FR); Lesieur, Franck, 06600 Antibes (FR); Angelini, Christophe, 06130 Grasse (FR); Ben Mansour, Borhen, 06160 Antibes Juan les Pins (FR)
(74) Representative: Samson & Partner Patentanwälte mbB

(57) **Abstract**

Methods, systems, and computer program products for preventive auditing of transactions involving the sale of travel products by indirect sellers. A preventive audit module receives data defining a price quoted for the travel product by the indirect seller. The module compares the quoted price to a correct price for the travel product to determine if there is a pricing discrepancy. If a discrepancy exists, the module may generate a warning message for transmission to the seller notifying the seller of the discrepancy. The warning message may include instructions for remedying the discrepancy, and a notification that a penalty may apply if the discrepancy is not remedied. For discrepancies remedied by issuing an Electronic Miscellaneous Document (EMD), a link may be defined between the EMD and the transaction for the sale of the travel product so that an auditing system knows to account for the EMD when auditing the transaction.

## Description

### BACKGROUND

The invention generally relates to computers and computer software, and in particular to methods, systems, and computer program products for preventive auditing of a transaction.

In the travel industry, airline tickets are often sold through an indirect seller, such as an online travel agency or a validating carrier. The indirect seller will typically check for available flights that satisfy a traveler's itinerary and, once matching flights are found, book the flights for the traveler. As part of this booking process, the indirect seller may collect payment from the traveler for the tickets. To cover the operating carrier's charges for providing transportation services, the indirect seller provides a portion of the collected payment to the operating carrier.

To ensure that indirect sellers are selling tickets in compliance with restrictions and rules relating to pricing of the ticket, these transactions may occasionally be audited. An audit may verify whether the amounts of the fare, taxes, and commission match the restrictions and rules in place regarding the details of the ticket sold. Because of the magnitude of annual worldwide revenue generated by the airline industry, correcting even small discrepancies across all tickets sold could result in a significant recovery of otherwise lost revenue.

If an audit indicates that a travel agency or validating carrier has not properly charged for a product, the operating carrier may attempt to recover the discrepancy by issuing an Agency Debit Memo (ADM). However, generating and issuing an ADM can add significant management costs to the transaction. To avoid issuing an ADM in cases where an audit is performed while the transaction is pending, the operating carrier may block the transaction in response to determining the discrepancy. However, blocking the transaction can result in a lost sale, which may result in more lost revenue to the operating carrier than if the transaction had been allowed to go through at the incorrect price.

Thus, improved systems, methods, and computer program products for auditing transactions and recovering discrepancies are needed that reduce costs associated with incorrect pricing of travel products by indirect sellers.

### SUMMARY

In an embodiment of the invention, a method of managing a transaction by a seller of a travel product is provided. The method includes receiving first data defining a first price quoted by the seller for the travel product, and determining a discrepancy between the first price and a second price that should be charged for the travel product. The method may further include generating a warning message for transmission to the seller notifying the seller of the discrepancy.

In another embodiment of the invention, an apparatus is provided that includes a processor and a memory. The memory includes program code that, when executed by the processor, causes the apparatus to receive the first data defining the first price quoted by the seller for the travel product, and determine the discrepancy between the first price and the second price that should be charged for the travel product. The program code may further cause the apparatus to generate the warning message for transmission to the seller notifying the seller of the discrepancy.

In another embodiment of the invention, a computer program product is provided that includes a non-transitory computer readable storage medium including program code. The program code may be configured, when executed by a processor, to cause the processor to receive the first data defining the first price quoted by the seller for the travel product, and determine the discrepancy between the first price and the second price that should be charged for the travel product. The program code may further cause the processor to generate the warning message for transmission to the seller notifying the seller of the discrepancy.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a plurality of computer systems in communication via a network.
FIG. 2 is a diagrammatic view of an exemplary computer system of FIG. 1.
FIG. 3 is a diagrammatic view of a block diagram depicting an operating environment for a preventive auditing module that may be provided by one or more of the computer systems in FIG. 1.
FIG. 4 is a flow chart depicting a preventive auditing process that may be executed by the preventive auditing module of FIG. 3.

### DETAILED DESCRIPTION

Embodiments of the invention may be implemented by a processing and database system, such as a Global Distribution System (GDS). The processing and database system may facilitate interconnections between indirect sellers of airline tickets and a plurality of computer reservation systems each associated with a travel service provider. In the context of air travel, the processing and database system may be configured allow travelers to book airline tickets and other travel products through indirect sales channels. These indirect sales channels may include online travel agencies and validating carriers selling tickets for services to be provided by an operating carrier. The indirect sellers may receive payment from the travelers for the booked tickets, and then compensate the operating carrier for the cost of the service provided.

The processing and database system may include a preventive auditing module that determines if the transaction is properly priced. This determination may be made while the transaction is pending, or shortly after the transaction has completed. If a discrepancy is detected, the preventive auditing module may block the transaction, inform the seller that the transaction was improperly priced so that they can take corrective action, or ignore the discrepancy and allow the ticket issue without taking any preventive action. In cases where the preventive auditing module warns the seller of the discrepancy, the warning message may provide the seller with instructions on how to remedy the discrepancy. The warning message may also include an indication of a penalty that may be added to a forthcoming Agency Debit Memo (ADM) if the discrepancy is not remedied. By following the instructions, the seller may avoid receiving the ADM from the operating carrier and incurring the additional penalty.

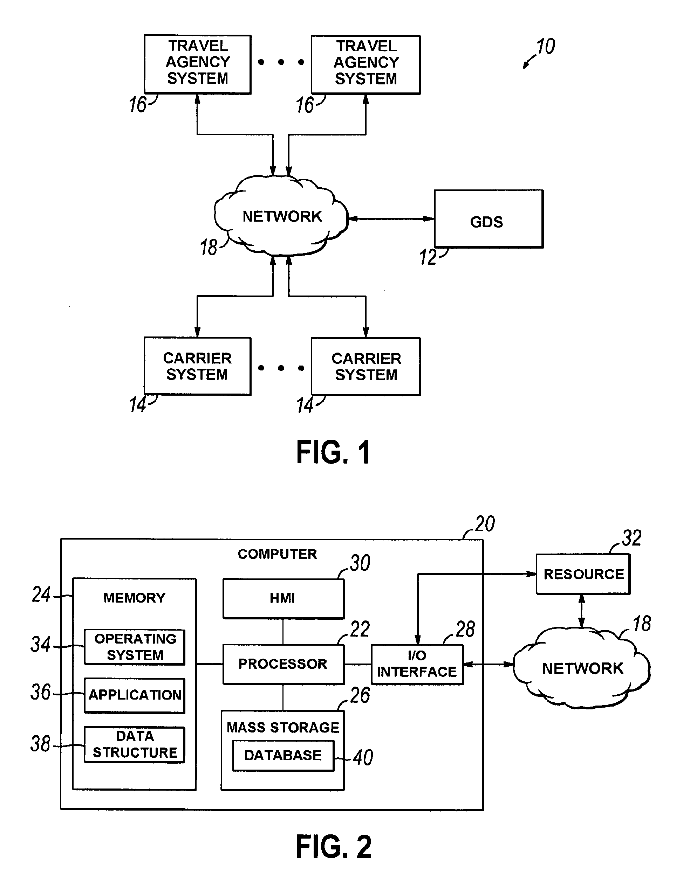

Referring now to FIG. 1, an operating environment 10 in accordance with an embodiment of the invention may include a Global Distribution System (GDS) 12, one or more carrier systems 14, and one or more travel agency systems 16 that are in communication via a network 18. The carrier systems 14 may each include a Computer Reservation System (CRS) or other billing system for the respective carrier that enables the GDS 12 or travel agency systems 16 to reserve and pay for airline tickets. The carrier systems 14 may also interact with each other, either directly or through the GDS 12, to enable a validating carrier to sell tickets for seats provided by the operating carrier. The operating carrier may then bill the validating carrier for the services provided. The network 18 may comprise one or more private or public networks (e.g., the Internet) that enable the exchange of data.

The GDS 12 may be configured to facilitate communication between the carrier systems 14 and travel agency systems 16 by enabling travel agents, validating carriers, or other indirect sellers to book reservations on one or more carrier systems 14 via the GDS 12. To this end, the GDS 12 may maintain links to each of the carrier systems 14 via the network 18. These links may allow the GDS 12 to route reservation and booking requests from the carrier systems 14 of the validating carrier or the travel agency systems 16 to the corresponding carrier systems 14 of the operating carrier. The carrier and travel agency systems 14, 16 may thereby book flights on multiple airlines via a single connection to the GDS 12. The GDS 12 may also store copies of Passenger Name Records (PNRs) generated by the carrier systems 14. These copies may allow a PNR to be maintained by the GDS 12 that includes a complete set of flight data for an itinerary including air segments from multiple airlines.

Referring now to FIG. 2, the GDS 12, carrier systems 14, and travel agency systems 16 of operating environment 10 may be implemented on one or more computing devices or systems, such as exemplary computer 20. The computer 20 may include a processor 22, a memory 24, a mass storage memory device 26, an input/output (I/O) interface 28, and a Human Machine Interface (HMI) 30. The computer 20 may also be operatively coupled to one or more external resources 32 via the network 18 or I/O interface 28. External resources may include, but are not limited to, computers, servers, databases, mass storage devices, peripheral devices, cloud-based network services, or any other suitable computer resource that may used by the computer 20.

The processor 22 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 24. Memory 24 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 26 may include data storage devices such as a hard drive, optical drive, tape drive, non-volatile solid state device, or any other device capable of storing information.

Processor 22 may operate under the control of an operating system 34 that resides in memory 24. The operating system 34 may manage computer resources so that computer program code embodied as one or more computer software applications, such as an application 36 residing in memory 24, may have instructions executed by the processor 22. In an alternative embodiment, the processor 22 may execute the application 36 directly, in which case the operating system 34 may be omitted. One or more data structures 38 may also reside in memory 24, and may be used by the processor 22, operating system 34, or application 36 to store or manipulate data.

The I/O interface 28 may provide a machine interface that operatively couples the processor 22 to other devices and systems, such as the network 18 or external resource 32. The application 36 may thereby work cooperatively with the network 18 or external resource 32 by communicating via the I/O interface 28 to provide the various features, functions, applications, processes, or modules comprising embodiments of the invention. The application 36 may also have program code that is executed by one or more external resources 32, or otherwise rely on functions or signals provided by other system or network components external to the computer 20. Indeed, given the nearly endless hardware and software configurations possible, persons having ordinary skill in the art will understand that embodiments of the invention may include applications that are located externally to the computer 20, distributed among multiple computers or other external resources, or provided by computing resources (hardware and software) that are provided as a service over the network 18, such as a cloud computing service.

The HMI 30 may be operatively coupled to the processor 22 of computer 20 in a known manner to allow a user to interact directly with the computer 20. The HMI 30 may include video or alphanumeric displays, a touch screen, a speaker, and any other suitable audio and visual indicators capable of providing data to the user. The HMI 30 may also include input devices and controls such as an alphanumeric keyboard, a pointing device, keypads, pushbuttons, control knobs, microphones, etc., capable of accepting commands or input from the user and transmitting the entered input to the processor 22.

A database 40 may reside on the mass storage memory device 26, and may be used to collect and organize data used by the various systems and modules described herein. The database 40 may include data and supporting data structures that store and organize the data. In particular, the database 40 may be arranged with any database organization or structure including, but not limited to, a relational database, a hierarchical database, a network database, or combinations thereof. A database management system in the form of a computer software application executing as instructions on the processor 22 may be used to access the information or data stored in database records in response to a query, where a query may be dynamically determined and executed by the operating system 34, other applications 36, or one or more modules.

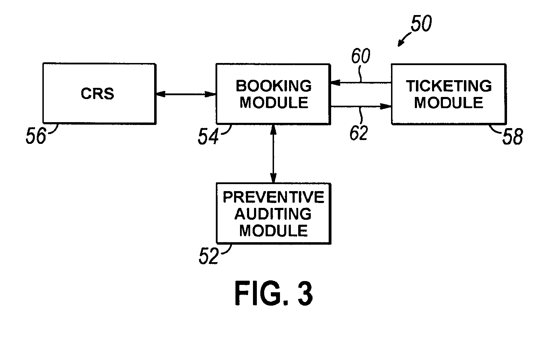

Referring now to FIG. 3, an exemplary operating environment 50 in accordance with an embodiment of the invention may include a preventive auditing module 52, a booking module 54, a CRS 56, and a ticketing module 58, each of which may be provided by a suitable computing system. For example, the preventive auditing module 52 and booking module 54 may be provided by the GDS 12, the CRS 56 may be provided by the one of the carrier systems 14, and the ticketing module 58 may be provided by one of the travel agency systems 16.

Purchasing an airline ticket or other travel product may involve booking, pricing, and ticketing the travel product. For example, a travel agent may indicate a desire to book a flight by interacting with a user interface provided by the ticketing module 58. In response to this interaction, the ticketing module 58 may send a booking request 60 to the booking module 54. The booking module 54 may then communicate with the CRS 56 to determine the availability of a flight identified in the booking request 60. If a seat is available for the requested flight, the booking module 54 may book the flight, and the CRS 56 may decrease the corresponding operating carrier's inventory to reflect the booking. The booking module 54 may then transmit a booking confirmation 62 to the ticketing module 58, which may in turn issue a ticket to the traveler. The amount charged for the ticket may be determined by the indirect seller with the help of a fare engine. This amount may be entered into the ticketing module 58 manually by the agent, or automatically based on data received from the fare engine. The traveler's account (e.g., credit card) may then be billed upon issuance of the ticket.

During the transaction, the preventive auditing module 52 may receive data defining a quoted price *P_{Q}* for the ticket, which may be the price that was charged for the ticket in the case of a completed transaction. This data may be received from the booking module 54, by monitoring communications between the GDS 12, carrier systems 14, and travel agency system 16, or in any other suitable manner. The preventive auditing module 52 may also determine an audit amount representing a correct price *P_{C}* that should be charged for the ticket. This determination may be performed, for example, in response to the booking module 54 receiving the booking request 60. The correct price *P_{C}* may be based on data relating to the ticket, such as a booking code, a class of service, an origination-destination city pair, a date of travel, or any other suitable data that characterizes the ticket. This data may be used to determine if fare tariffs, business rules, routing maps, class of service tables, tax information, etc., were properly implemented by the indirect seller to determine quoted price *P_{Q}* for the ticket. Business rules may include booking conditions such as minimum stay or advance purchase, and may be specific to a city pair or a class of service.

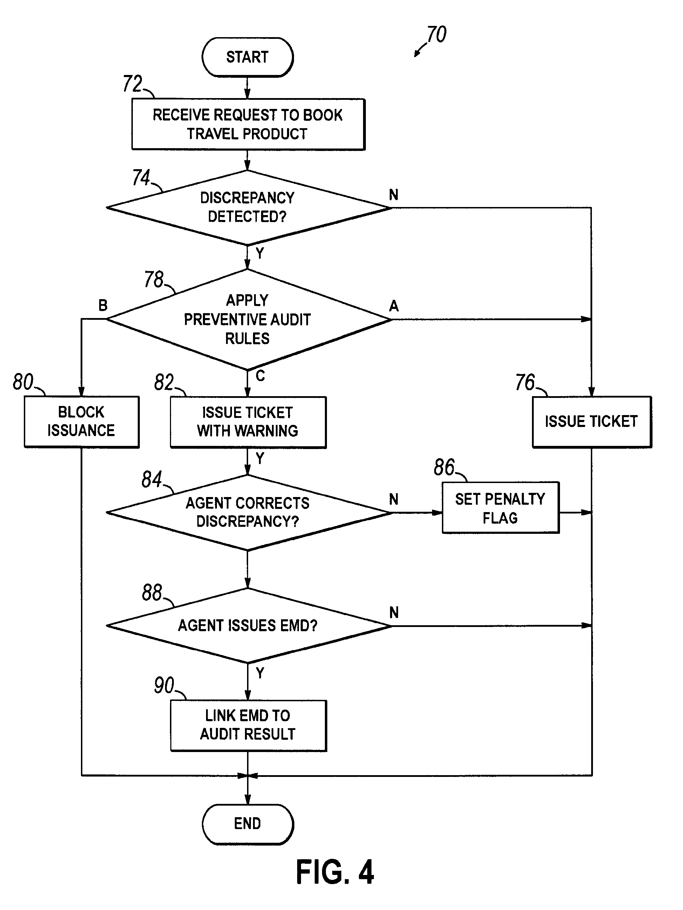

Referring now to FIG. 4, a flow chart is presented that depicts a preventive auditing process 70 that may be performed by the preventive auditing module 52 in accordance with an embodiment of the invention. In block 72, the process 70 may receive a request to book a travel product, such as a flight. In response to receiving the request, the process 70 may proceed to block 74 and determine if there is a discrepancy *V = P_{C} - P_{Q}.* If the discrepancy *V* is not "detected" ("NO" branch of decision block 74), the process 70 may proceed to block 76 and allow the ticket to issue without further action. If a discrepancy *V* is detected ("YES" branch of decision block 74), the process 70 may proceed to block 78. In an embodiment of the invention, the discrepancy *V* may be detected if the discrepancy V is positive, and not detected if the discrepancy *V* is zero or negative. Detection may also occur in response to the discrepancy *V* having a positive value sufficient to warrant processing according to a set of preventive auditing rules.

In block 78, the process 70 may apply the set of preventive auditing rules to the transaction. The preventive auditing rules may cause the process 70 to select a response ("A", "B", or "C" branch of decision block 74) base on one or more characteristics of the transaction. For example, the process 70 may select a response based on one or more of the amount of the discrepancy *V,* the identity of the indirect seller, the identity of the operating carrier, the type of travel product being sold, the correct price *P_{C}*, the quoted price *P_{Q},* or any other characteristic of the transaction or travel product.

Based on the results of applying the preventive audit rules, the process 70 may proceed to block 76 ("A" branch of decision block 78) and allow the ticket to issue, proceed to block 80 ("B" branch of decision block 78) and block issuance of the ticket, or proceed to block 82 ("C" branch of decision block 78) and allow the ticket to issue with a warning. The choice between proceeding to blocks 76, 80 or 82 may depend on user settings in the preventive auditing module 52 that enable certain features, such as the warning message feature. The choice may also depend on the one or more characteristics of the transaction. By way of example only, the preventive auditing rules may be configured so that if the discrepancy V is positive, the process 70 proceeds to block 80 if the indirect seller is a validating carrier, and to block 82 if the indirect seller is travel agency.

In block 82, the process 70 may cause the ticketing module 58 to display a warning message to the travel agent, but otherwise allow the ticket to issue. This warning message may be displayed while the transaction is pending, or after the transaction has completed. The warning message may warn the travel agent that an ADM may be forthcoming unless the discrepancy V is addressed. The warning message may also include information that helps the travel agent price the ticket correctly, and an indication that a penalty may be assessed unless the discrepancy is remedied prior to issuance of the ADM. The warning message may thereby motivate the travel agent to remedy the discrepancy V to avoid receiving the ADM. The process 70 may then proceed to block 84 and determine if the travel agent has fully remedied the discrepancy V.

If the agent fails to fully remedy the discrepancy ("NO" branch of decision block 84), the process 70 may proceed to block 86 and set a penalty flag. The penalty flag may notify an operator generating the ADM that the additional penalty applies, or otherwise cause the additional penalty to be added to the ADM if and when the ADM issues. The additional penalty for failing to remedy the discrepancy despite being warned may provide an incentive to the travel agent to remedy the discrepancy V rather than waiting to see if the ADM issues. The additional penalty may also offset the cost of generating the ADM, which may make it more likely that the operating carrier will issue the ADM.

In response to the travel agent remedying the discrepancy V ("YES" branch of decision block 84, the process may proceed to block 88. In block 88, the process 70 may determine if the travel agent used an Electronic Miscellaneous Document (EMD) to remedy the discrepancy. If the traveler is still present, the travel agent may remedy the discrepancy V by voiding the transaction and issuing a new correctly priced ticket. The travel agent may also remedy the discrepancy V by collecting an additional amount to offset the discrepancy V. This additional amount may be collected by issuing the EMD. If the traveler is available to authorize the charge, the additional amount may be charged to the traveler's account. If the traveler is not available, or the travel agent does not want to request additional funds from the traveler, the travel agent may cover the cost of the EMD using their own funds in order to avoid incurring the penalty.

To assist the travel agent in remedying the discrepancy .*V,* the warning message may provide options to the travel agent for remedying the discrepancy *V.* The options presented may be based on, for example, the identity of the travel agent and the features of the ticketing module 58. For example, if the travel agent has access to automatic pricing, the warning message may include a link or command to void the ticket and use automatic pricing to issue a new ticket. If agent does not have access to automatic pricing (e.g., the travel agent has not subscribed to an automated ticket changing feature), the warning message may display instructions on how to void the first issuance ticket and manually price the reissue ticket at the correct price Pc. Thus, the level of detail in the warning message may be adapted to the specific travel agent. For example, the warning message may merely inform the travel agent that the price is incorrect, or may include information as to why the pricing is incorrect, such as "ticket pricing violates rule X". The agent's selection of how to remedy the discrepancy V may also depend on what fees are required to change the ticket, whether the ticket is a first issuance or a reissuance, or if the travel agent is authorized to autonomously reissue the ticket at a different price.

The travel agent may choose to issue an EMD rather than void the first issue ticket and reissue a new ticket to prevent authorizations for both the voided ticket and the reissued ticket from appearing on the traveler's credit card account. Having authorizations for both the voided ticket and reissued ticket on the traveler's credit card account could, for example, result in the total authorized charges exceeding the traveler's credit limit. To facilitate issuance of the EMD, the warning message may include instructions on how to generate an EMD.

In response to the travel agent issuing an EMD ("YES" branch of decision block 88), the process 70 may proceed to block 90. In block 90, the process 70 may link the EMD to the transaction. This linking may allow a subsequent audit of the transaction to take into account the additional funds provided by the EMD. Linking the EMD to the transaction may thereby prevent an ADM from being erroneously issued based solely on the initial price charged for the ticket. The linking may be provided, for example, by adding a Reason For Issuance Code (RFIC) or Reason For Issuance Sub Code (RFISC) to the EMD that identifies the ticket having the discrepancy *V* which was remedied by the EMD.

When an audit is performed, the auditing system may detect the RFIC or RFISC, and link the EMD to the corresponding transaction based thereon. The auditing system may then subtract the charge associated with the linked EMD from the discrepancy *V* to determine if the ADM should be issued. If the amount charged for the EMD sufficiently offsets the discrepancy *V,* the auditing system may determine that an ADM should not be raised, or that a previously raised ADM should be canceled. If the EMD does not sufficiently offset the discrepancy *V,* the auditing system may determine that an ADM should be raised, or that the previously raised ADM should be amended so that the amount of the ADM corresponds to the remaining discrepancy V and any assessed penalties. In any case, the discrepancy V may be divided between different fares, taxes, fees, and commission amounts based on rules defined in the auditing system.

The program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions or acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions or acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method of managing a transaction by a seller of a travel product, the method comprising:
receiving, at a computer, first data defining a first price quoted by the seller for the travel product;
determining, by the computer, a discrepancy between the first price and a second price that should be charged for the travel product; and
generating, by the computer, a warning message for transmission to the seller notifying the seller of the discrepancy.

2. The method of claim 1 further comprising:
in response to the transaction being completed at the first price, transmitting the warning message to the seller.

3. The method of claim 1 or claim 2 further comprising:
generating a database record associated with the transaction, and
adding a data structure to the database record indicating a penalty should be added to the discrepancy.

4. The method of claim 3 further comprising:
in response to the seller remedying the discrepancy, removing the data structure from the database record.

5. The method of any of claims 1 to 4 wherein the warning message includes an indication of a penalty that will be charged to the seller if the discrepancy is not remedied.

6. The method of any of claims 1 to 5 wherein the warning message includes information on how to remedy the discrepancy.

7. The method of claim 6 wherein the information includes instructions on how to generate an electronic miscellaneous document linked to the transaction.

8. The method of any of claims 1 to 6 further comprising:
in response to receiving second data indicating that the seller issued an electronic miscellaneous document to collect at least a portion of the discrepancy, linking, at the computer, the electronic miscellaneous document to the transaction.

9. The method of any of claims 1 to 8 wherein the warning message includes an interface for voiding the travel product.

10. The method of claim 9 further comprising:
in response to the seller activating the interface, voiding the travel product.

11. An apparatus for managing a transaction by a seller of a travel product, the apparatus comprising:
a processor; and
a memory including program code that, when executed by the processor, causes the apparatus to:
receive first data defining a first price quoted by the seller for the travel product;
determine a discrepancy between the first price and a second price that should be charged for the travel product; and
generate a warning message for transmission to the seller notifying the seller of the discrepancy.

12. The apparatus of claim 11 being further arranged to execute any of the methods of claims 2 to 10.

13. A computer program that, when executed by a processor, causes the processor to:
receive first data defining a first price quoted by a seller for a travel product;
determine a discrepancy between the first price and a second price that should be charged for the travel product; and
generate a warning message for transmission to the seller notifying the seller of the discrepancy.

14. The computer program of claim 14 being further configured to cause the processor to perform any of the methods of claims 2 to 10.
